(19) Europäisches Patentamt
European Patent Office
Office européen des brevets

(11) **EP 1 331 575 A1**

(12) **EUROPÄISCHE PATENTANMELDUNG**

(43) Veröffentlichungstag:
**30.07.2003 Patentblatt 2003/31**

(51) Int Cl.⁷: **G06F 17/21**

(21) Anmeldenummer: **02075233.3**

(22) Anmeldetag: **18.01.2002**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (71) Anmelder: **SAP Aktiengesellschaft**<br>**69190 Walldorf (DE)**<br><br>(72) Erfinder: **Kammerer, Matthias**<br>**76199 Karlsruhe (DE)** |

(54) **Computerbasiertes Erstellen eines Dokuments in Auszeichnungssprache**

(57) Das Erstellen eines Dokumentes (<A> ... </A>) in einer Auszeichnungssprache mit Textelementen (331, 332) zwischen ersten Auszeichnungen (311, 312) und zweiten Auszeichnungen (321, 322) erfolgt durch Laden einer Tabellenvorlage (200) mit einer Formatierung (250) für die folgenden Spalten: einer linken Spalte (210) mit den ersten Auszeichnungen (311, 312), einer rechten Spalte (220) mit den zweiten Auszeichnungen (321, 322) und einer Mittel-Spalte (230); Anzeigen der Tabellenvorlage (200); Empfangen einer Benutzereingabe (331, 332) in der Mittel-Spalte (330); sowie das Entfernen der Formatierung (250) unter Beibehaltung der Auszeichnungen (311,312, 321, 322) und der Benutzereingabe (331, 332).

250

| 210 | 230 | 220 |
|---|---|---|
| 311 < A > | 331 Bei | 321 < /A > |
| 312 < B > | | 322 < /B > |

200     TABELLENVORLAGE

FIG. 3

EP 1 331 575 A1

**Beschreibung**

Gebiet der Erfindung

Die vorliegende Erfindung betrifft computerbasierte Datenverarbeitung im allgemeinen, sowie Verfahren, Vorlagen und Programme zum Erstellen von Dokumenten im besonderen.

Hintergrund

Auszeichnungssprachen (markup languages) werden in Computer-Dokumenten verwendet, beispielsweise zur Speicherung und Übertragung von Daten oder zur Steuerung von Internet-Browsern.

Die Sprachen sind bekannt unter Abkürzungen wie XML (Extensible Markup Language), HTML (Hypertext Markup Language), XHTML (Extensible Hypertext Markup Language), WML (Wireless Application Markup Language), oder SGML (Standard Generalized Markup Language). Die Auszeichnungen sind Anweisungen, die in die Dokumente eingefügt sind ("tags"), wahlweise mit Attributen.

In einem Dokument heben Syntaxvereinbarungen die Auszeichnungen von den Inhalten ab. Üblicherweise steht Inhalt (z.B. das Wort "Beispiel") zwischen einem Start-Tag (z.B. <A>) und einem End-Tag (z.B. </A>):

$$< A > \text{Beispiel} </A> \tag{1}$$

Attribute befinden sich oft innerhalb eines Tags, so zum Beispiel das Attribut "Sprache" in der Ausprägung "Deutsch" im Start-Tag in folgender Form:

$$< A \ \text{SPRACHE="DE"} > \tag{2}$$

Die Auszeichnungen sind in Dokumenten-Typ-Definitionen (DTD) und Standards festgelegt.

Die Dokumente dienen oft als Schnittstellen zwischen Benutzer und Computer. Sie werden manuell erstellt und maschinell verarbeitet, maschinell erstellt und verarbeitet, seltener maschinell erstellt und manuell verarbeitet oder manuell erstellt und verarbeitet. Der erste Fall ist besonders kritisch, da der Benutzer Kenntnisse der Auszeichnungssprache benötigt und zuweilen Fehler einführt, die oft unerkannt bleiben.

Technische Unterstützung erhält der Benutzer von Computern mit Programmen wie Editoren und Parsern. Spezial-Editoren helfen dem Benutzer beim Erstellen. Parser überprüfen die fertigen Dokumente.

Jedoch bleiben technische Probleme bestehen:

(a) Spezial-Editoren und Parser benötigen die jeweils gültigen Definitionen. Die Definitionen werden oft vom Dokument getrennt verwaltet, so daß im Fehlerfall die falsche Definition angewendet wird.
(b) Geeignete Editoren und Parser sind oft nicht verfügbar.
(c) Editoren und Parser sind Spezialprogramme, deren Bedienung Fachleuten vorbehalten bleibt.

Zusammenfassung

Die Probleme werden mit einem erfindungsgemäßen Verfahren nach dem Hauptanspruch gelöst. Ein Computer-Programm-Produkt (CPP) sowie bevorzugte Ausführungsformen sind Gegenstand der weiteren Ansprüche.

Es wird eine Formatvorlage bereitgestellt, die bereits die wesentlichsten Auszeichnungen enthält. Der Benutzer gibt lediglich den Inhalt zwischen den Auszeichnungen ein und veranlasst den Computer zur automatischen Umwandlung in das fertige Dokument.

Im einzelnen, die Erfindung betrifft ein computerbasiertes Verfahren zum Erstellen eines Dokumentes in einer Auszeichnungssprache. Das Dokument enthält Textelemente, die jeweils zwischen ersten Auszeichnungen (z.B. Start-Auszeichnung) und zweiten Auszeichnungen (z.B. End-Auszeichnung) stehen. Das Verfahren enthält die folgenden Verfahrensschritte:

- Laden einer Tabellenvorlage mit einer Formatierung für eine erste Spalte mit den ersten Auszeichnungen, für eine zweite Spalte mit den zweiten Auszeichnungen, und für eine dritte Spalte (befindlich zwischen der ersten und zweiten Spalte);
- Anzeigen der Tabellenvorlage;
- Empfangen einer Benutzereingabe in der dritten Spalte;

- Entfernen der Formatierung unter Beibehaltung der Auszeichnungen und der Benutzereingabe.

Bevorzugt werden die Auszeichnungssprachen XML, HTML, XHTML und SGML. In diesem Fall sind die ersten Auszeichnungen Start-Tags und die zweiten Auszeichnungen End-Tags. Die Auszeichnungen können auch Attribute einschließen. Wahlweise wird eine Kommentar-Kennzeichnung geladen, die dem Benutzer die Bedeutung der Benutzereingabe angibt. Wahlweise werden beim Laden die Auszeichnungen ausgeblendet, so daß Anzeigen auf die dritte Spalte beschränkt bleibt. Wahlweise wird ein Schreibschutz für die erste und die zweite Spalte eingeführt. Formularfunktionen, Hinweise und Hilfen sind ebenfalls wahlweise.

Wahlweise sind auch die folgenden Eigenschaften: Beim Laden liegt die Tabellenvorlage als Tabelle in einem Textverarbeitungsprogramm vor. Beim Anzeigen wird die Tabelle auf einem Bildschirm angezeigt. Beim Entfernen wird die Tabelle (a) in eine Zwischenablage (Clipboard) kopiert und von dort in einen Texteditor kopiert oder (b) die Tabelle in einem Text-Format gespeichert.

Das Textverarbeitungsprogramm hat die Funktionalitäten des Programms WORD und der Texteditor die Funktionalitäten des Programms NOTEPAD. Beim Laden wird eine Tabellenvorlage geladen, deren dritte Spalte Formularfunktionen bzw. Kurzhilfen haben.

Die Erfindung betrifft auch ein computerbasiertes Verfahren zum Erstellen einer Tabellenvorlage für ein Dokument in einer Auszeichnungssprache, wobei das Dokument Textelemente enthalten soll, die jeweils zwischen Start-Auszeichnungen und End-Auszeichnungen stehen. Das Verfahren ist gekennzeichnet durch das Anlegen von drei Tabellenspalten, wobei die Mittel-Spalte die Textelemente als Benutzereingaben empfangen kann und die Formatierung der Spalten entfernbar ist, sowie durch das Auswerten einer Definitionsdatei (DTD) mit Definitionen zum Beschreiben der linken Spalte mit Start-Auszeichnungen und

Definitionen der rechten Spalte mit End-Auszeichnungen, wobei die Start-Auszeichnungen und die End-Auszeichnungen dauerhaft (d.h. nicht entfernbar) ausgelegt sind.

Die Erfindung betrifft auch ein Computer-Programm-Produkt (CPP) als Tabellenvorlage zum Erstellen eines Dokumentes in einer Auszeichnungssprache. Die Spalten sind formatiert als erste Spalte mit ersten Auszeichnungen, als zweite Spalte mit zweiten Auszeichnungen, und als dritte Spalte zwischen der ersten und zweiten Spalte zum Empfangen einer Benutzereingabe. Die Formatierung ist entfernbar unter Beibehaltung der Auszeichnungen und der Benutzereingabe, so daß bei entfernter Formatierung das Dokument in Auszeichnungessprache bereitsteht.

Bevorzugt entsprechen die Auszeichnungen des Produkts der Sprache XML, wobei die Auszeichnungen durch eine DTD bestimmt werden.

Hinsichtlich der oben genannten Probleme stellt das Verfahren eine vorteilhafte Lösung bereit.

(a) Definitionen und Dokument gehören untrennbar zusammen.

(b) Die Tabellenvorlage ist auf handelsüblichen und verbreiteten Textverarbeitungsprogrammen lauffähig und nicht auf ein bestimmtes Programm beschränkt.

(c) Der Benutzer arbeitet mit dem ihm vertrauten Textverarbeitungsprogramm. Kommentare und erweiterte Formatierungen (Ausblendung, Formulare, Hinweise, Hilfen) stellen dem Benutzer die benötigten Informationen bereit, erzwingen vorbestimmte Eingaben (z.B. durch Formularfunktion), und verhindern das versehentliche Verfälschen der Definitionen (z.B. in den Außenspalten).

Die Dokumente entsprechen demnach der Definition ("valide" Dokumente). Der Benutzer benötigt keine Programmierkenntnisse und keine Kenntnisse der Auszeichnungssprache. Schreibschutz verhindert Falscheingabe.

Die Vorlage selbst kann in einer Auszeichnungssprache vertrieben werden und vom Textverarbeitungsprogramm interpretiert werden.

Kurzbeschreibung der Zeichnungen

FIG. 1    zeigt ein allgemeines Computersystem;
FIG. 2    zeigt ein Dokument in Auszeichnungssprache mit Auszeichnungen als Start- und End-Tags;
FIG. 3    zeigt eine erfindungsgemäße Tabellenvorlage;
FIG. 4    zeigt einen Ablaufplan eines Verfahrens gemäß der Erfindung;
FIG. 5    zeigt ein kommentiertes Dokument;
FIG. 6    zeigt eine erweiterte Tabellenvorlage;
FIG. 7    zeigt ein Dokument mit Attributen;
FIG. 8    zeigt eine erweiterte Tabellenvorlage.

Allgemeines Computersystem

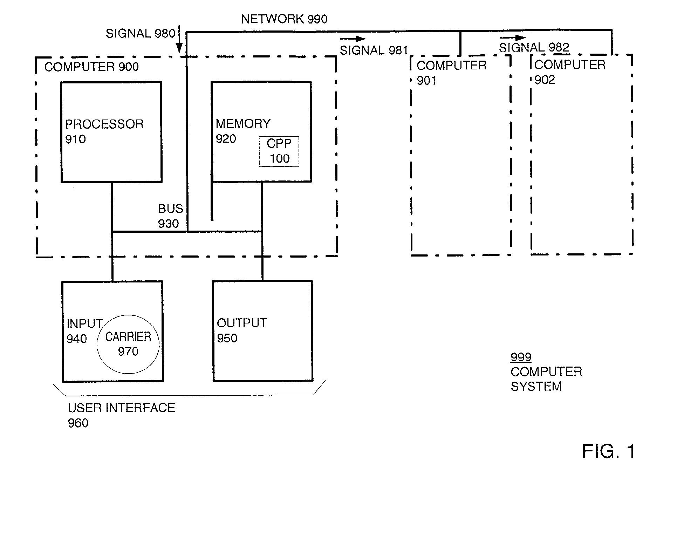

FIG. 1 zeigt ein vereinfachtes Blockschaltbild eines Computernetzsystems 999 mit einer Vielzahl von Computern (oder 90q, q=0...Q-1, Q beliebig).

Die Computer 900-902 sind über ein Netzwerk 990 verbunden. Der Computer 900 umfaßt einen Prozessor 910, einen Speicher 920, einen Bus 930 und wahlweise eine Eingabevorrichtung 940 und eine Ausgabevorrichtung 950 (Ein- und Ausgabevorrichtung ergeben die Benutzerschnittstelle 960). Die Erfindung liegt als Computerprogrammprodukt (CPP) 100 (oder 10q, wobei q=0...Q-1, Q beliebig), als Programmträger 970 und als Programmsignal 980 vor. Diese Komponenten werden im folgenden als Programm bezeichnet.

Die Elemente 100 und 910-980 des Computers 900 verallgemeinern die entsprechenden Elemente 10q und 91q-98q (gezeigt für q=0 in Computer 90q).

Computer 900 ist beispielsweise ein konventioneller Personalcomputer (PC), ein Multiprozessorcomputer, eine Mainframecomputer, eine tragbarer oder ein stationärer PC oder dergleichen.

Der Prozessor 910 ist beispielsweise ein Zentralprozessor (CPU), ein Mikrocontroller (MCU), oder ein digitaler Signalprozessor (DSP). Der Speicher 920 symbolisiert Elemente, die Daten und Befehle entweder zeitweilig oder dauerhaft speichern. Obwohl zum besseren Verständnis der Speicher 920 als Teil des Computers 900 gezeigt ist, kann die Speicherfunktion im Netzwerk 990 auch an anderer Stelle implementiert werden, beispielsweise in den Computern 901/902 oder im Prozessor 910 selbst (z.B. Cache, Register). Der Speicher 920 kann ein Read-Only-Memory (ROM), ein Random-Access-Memory (RAM) oder ein Speicher mit anderen Zugriffsoptionen sein. Der Speicher 920 wird physisch auf einem computerlesbaren Datenträger implementiert, zum Beispiel auf: (a) einem magnetischen Datenträger (Festplatte, Diskette, Magnetband); (b) einem optischen Datenträger (CD-ROM, DVD); c) einem Halbleiterdatenträger (DRAM, SRAM, EPROM, EEPROM); oder auf einem beliebig anderem Medium (z.B. Papier). Wahlweise ist der Speicher 920 über verschiedene Medien verteilt. Teile des Speichers 920 können fest oder austauschbar angebracht sein. Zum Lesen und Schreiben benutzt der Computer 900 bekannte Mittel wie Diskettenlaufwerke oder Bandlaufwerke.

Der Speicher 920 speichert Unterstützungskomponenten wie zum Beispiel ein Bios (Basic Input Output System), ein Betriebssystem (OS), eine Programmbibliothek, einen Compiler, einen Interpreter oder ein Textverarbeitungsprogramm. Unterstützungskomponenten sind kommerziell verfügbar und können auf dem Computer 900 von Fachleuten installiert werden. Zum besseren Verständnis sind diese Komponenten nicht dargestellt. CPP 100 umfaßt Programminstruktionen und - wahlweise - Daten, die den Prozessor 910 unter anderem dazu veranlassen, die Verfahrensschritte 430-450 der vorliegenden Erfindung auszuführen. Die Verfahrensschritte werden später im Detail erläutert. Mit anderen Worten, das Computerprogramm 100 definiert die Funktion des Computers 900 und dessen Interaktion mit dem Netzwerk system 999. Ohne hier eine Einschränkung zu beabsichtigen, CPP 100 kann beispielsweise als Quellcode in einer beliebigen Programmiersprache und als Binärcode in kompilierter Form vorliegen. Der Fachmann ist in der Lage, CPP 100 in Verbindung mit jeder der zuvor erläuterten Unterstützungskomponenten (z. B. Compiler, Interpreter, Betriebssystem) zu benutzen.

Obwohl CPP 100 als im Speicher 920 gespeichert dargestellt ist, kann CPP 100 aber auch an beliebig anderer Stelle gespeichert sein. CPP 100 kann ebenfalls auf dem Datenträger 970 gespeichert sein.

Der Datenträger 970 ist außerhalb des Computers 900 dargestellt. Um CPP 100 auf den Computer 900 zu übertragen, kann der Datenträger 970 in das Eingabegerät 940 eingeführt werden. Der Datenträger 970 ist als ein beliebiger, computerlesbarer Datenträger implementiert, wie zum Beispiel als eines der zuvor erläuterten Medien (vgl. Speicher 920). Im allgemeinen ist der Datenträger 970 ein Erzeugnis, das ein computerlesbares Medium enthält, auf dem computerlesbare Programmcodemittel hinterlegt sind, die zur Ausführung des das Verfahren der vorliegenden Erfindung dienen. Des weiteren kann das Programmsignal 980 ebenfalls CPP 100 beinhalten. Das Signal 980 wird über das Netzwerk 990 zum Computer 900 übertragen.

Die ausführliche Beschreibung von CPP 100, Traäger 970 und Signal 980 ist anzuwenden auf die Datenträger 971/972 (nicht gezeigt), auf das Programmsignal 981/982, sowie auf das Computerprogrammprodukt (CPP) 101/102 (nicht gezeigt), welches vom Prozessor 911/912 (nicht gezeigt) im Computer 901/902 ausgeführt wird.

Die Eingabevorrichtung 940 steht für eine Vorrichtung, die Daten und Anweisungen zur Verarbeitung durch den Computer 900 bereitstellt. Beispielsweise ist die Eingabevorrichtung 940 eine Tastatur, eine Zeigevorrichtung (Maus, Trackball, Cursorpfeile), Mikrofon, Joystick, Scanner. Obwohl es sich bei den Beispielen allesamt um Vorrichtungen mit menschlicher Interaktion handelt, kann die Vorrichtung 940 auch ohne menschliche Interaktion auskommen, wie zum Beispiel ein drahtloser Empfänger (z.B. mittels Satelliten- oder terrestrischer Antenne), ein Sensor (z.B. ein Thermometer), ein Zähler (z.B. ein Stückzahlzähler in einer Fabrik). Eingabevorrichtung 940 kann ebenfalls zum Lesen des Datenträgers 970 verwendet werden.

Die Ausgabevorrichtung 950 steht für eine Vorrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabevorrichtung 940 kommuniziert die Ausgabevorrichtung 950 mit dem Benutzer, aber sie kann ebenfalls mit anderen Computern kommunizieren.

Die Eingabevorrichtung 940 und die Ausgabevorrichtung 950 können in einer einzigen Vorrichtung kombiniert werden. Beide Vorrichtungen 940, 950 können wahlweise bereitgestellt werden.

Der Bus 930 und das Netzwerk 990 stellen logische und physische Verbindungen dar, die sowohl Befehle als auch Datensignale übertragen. Verbindungen innerhalb des Computers 900 werden üblicherweise als Bus 930 bezeichnet, Verbindungen zwischen den Computern 900-902 werden als Netzwerk 990 bezeichnet. Die Vorrichtungen 940 und 950 sind mit dem Computer 900 durch den Bus 930 (wie gezeigt) verbunden oder - wahlweise - über das Netzwerk 990 angeschlossen. Die Signale innerhalb des Computers 900 sind überwiegend elektrische Signale, wohingegen die Signale im Netzwerk elektrische, magnetische und optische Signale oder auch drahtlose Funksignale sein können.

Netzwerkumgebungen (wie Netzwerk 990) sind in Büros, unternehmensweiten Computernetzwerken, Intranets und im Internet (d.h. World Wide Web) üblich. Die physische Entfernung zwischen den Computern im Netzwerk ist ohne von Bedeutung. Netzwerk 990 kann ein drahtloses oder ein verdrahtetes Netzwerk sein. Als mögliche Beispiele für Implementierungen des Netzwerks 990 seien hier angeführt: ein lokales Netzwerk (LAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung.

Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language) usw.

Schnittstellen zum Koppeln der einzelnen Komponenten sind ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter oder eine Soundkarte sein.

Computer und Programm sind eng verbunden. In der Beschreibung sind Wendungen wie "der Computer stellt zur Verfügung" und "das Programm stellt zur Verfügung" übliche Abkürzungen, die programmgesteuerte Verfahrensschritte des Computers beschreiben.

Ausführliche Beschreibung der weiteren Zeichnungen

Dreistellige Bezugszahlen stehen über den bezeichneten Elementen oder links davon. Sie gehören jedoch weder zur Tabellenvorlage noch zum Dokument. Leerzeichen und Abstände zwischen den dargestellten Zeichen dienen nur der besseren Verständlichkeit und können entfallen.

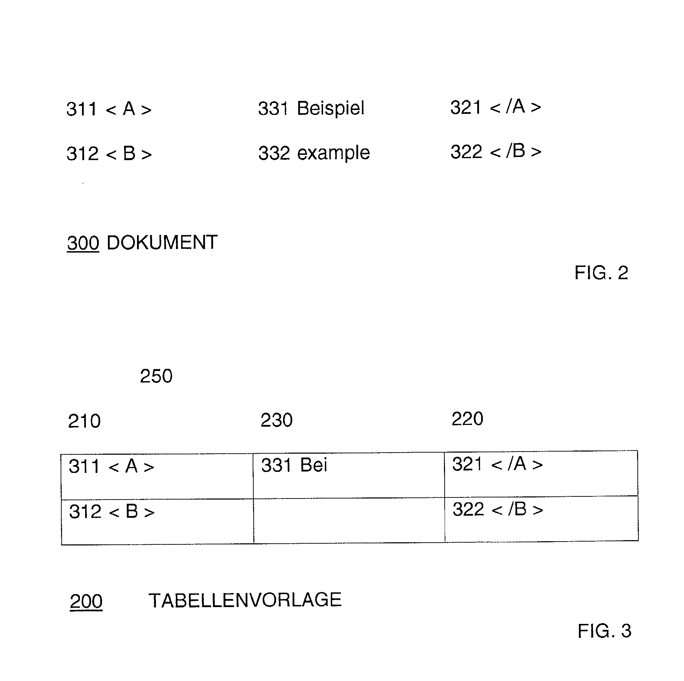

FIG. 2 zeigt ein Dokument 300 in Auszeichnungssprache, das nach Verfahren 400 entsprechend der vorliegenden Erfindung erstellt ist.

Die vereinfachte Darstellung von Dokument 300 steht stellvertretend für die Eingabe 331, 332

$$\text{"Beispiel"} = \text{"example"} \tag{3}$$

in ein deutsch-englisches Wörterbuch. Die Bedeutung der Auszeichnungen A und B ist vorbestimmt, zum Beispiel in einer Definition (Document Type Definition, DTD). Die Auszeichnungen als Start-Tags 311, 312 und End-Tags 321, 322 sind dargestellt in XML.

FIG. 3 zeigt die erfindungsgemäße Tabellenvorlage 200. Tags 311, 312, 321, 322 und Eingabe 331, 332 entsprechen dem Dokument 200 der FIG. 2. Der Benutzer schreibt gerade das Wort "Beispiel" der Eingabe 331.

Die Tabellenvorlage 200 hat folgende Formatierung 250: linke Spalte 210 (mit Auszeichnungen 311, 312), rechte Spalte 220 (Auszeichnungen 321, 322) und Mittel-Spalte 230 (für Eingabe 331, 332).

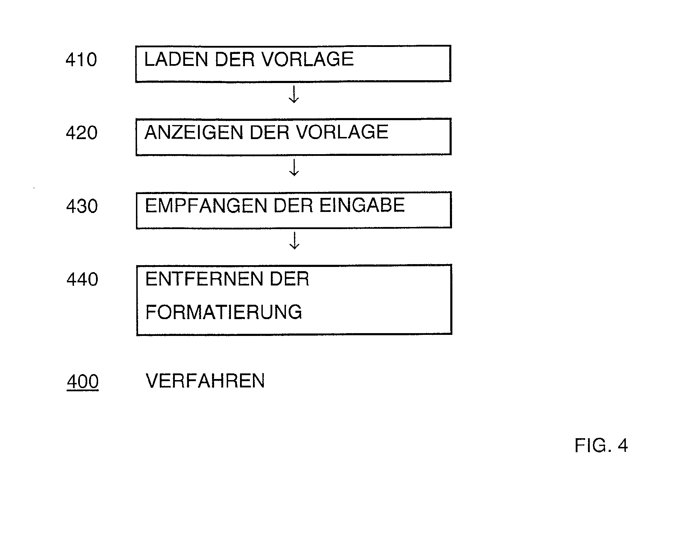

FIG. 4 zeigt einen Ablaufplan eines Verfahrens 400 mit den folgenden Verfahrensschritten:

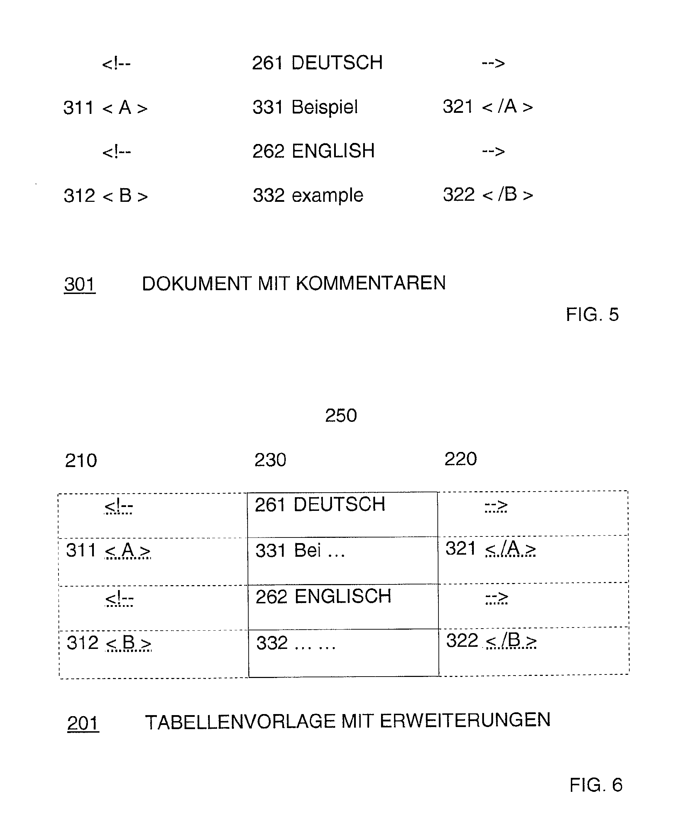

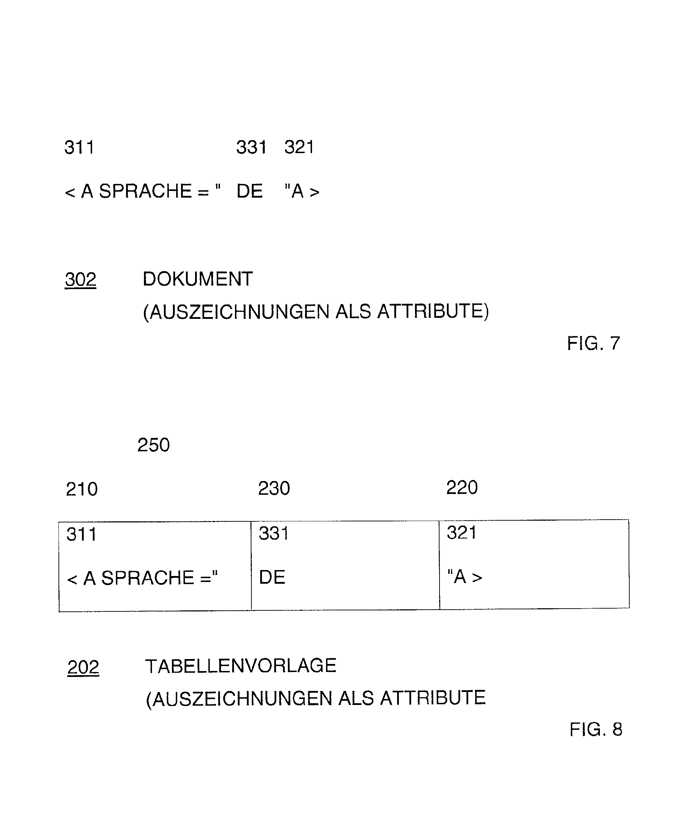

Laden 410 einer Tabellenvorlage 200 (vgl. 201, 202 in FIGS. 6, 8) mit der Formatierung 250 für die erste Spalte 210 mit den ersten Auszeichnungen 311, 312, für die zweite Spalte 220 mit den zweiten Auszeichnungen 321, 322 und für die dritte Spalte 230 zwischen der ersten und zweiten Spalte 210, 220, vgl. FIG. 3;
Anzeigen 420 der Tabellenvorlage 200, vgl. FIG. 3;
Empfangen 430 einer Benutzereingabe 331, 332 in der dritten Spalte 230, vgl. FIG. 3;
Entfernen 440 der Formatierung 250 unter Beibehaltung der Auszeichnungen 311, 312, 321, 322 und der Benutzereingabe 331, 332, vgl. FIG. 2.

FIGS. 5-8 zeigen weitere Ausführungsformen mit Dokument und Tabellenvorlage als Ergänzung zu FIGS. 2-3. Die Ausführungsformen können auch kombiniert werden. Die Dokumente 301, 302 sind Erweiterungen des Dokuments 300; ebenso sind die Tabellenvorlagen 201, 202 Erweiterungen der Vorlage 200.

FIG. 5 zeigt ein kommentiertes Dokument 301. Die Kommentare 261, 262 ("DEUTSCH", "ENGLISCH") befinden sich innerhalb der Kommentarauszeichnungen (<!-- und -->) in zusätzlichen Zeilen. Ein Parser wird die Kommentare beim Verarbeiten ignorieren. Der Parser kann die Kommentare jedoch auch aus Dokument 301 entfernen, beispielsweise um das Datenvolumen zu verkleinern. Dazu erhält der Parser eine entsprechende Anweisung (z.B. Extensible Style Language - XSL).

FIG. 6 zeigt eine erweiterte Tabellenvorlage 201 mit erweiterten Formatierungen (z.B. Ausblendung, Formulare, Hinweise, Hilfen), die mit handelsüblichen Textverarbeitungsprogrammen eingestellt werden können.

Ausblendungen betreffen die Kommentarauszeichnungen (<!-- und -->) sowie die Auszeichnungen 311, 312 (links) und 321, 322 (rechts). Ausblendungen sind durch Punklinien dargestellt. Der Benutzer sieht lediglich die Kommentare ("Deutsch" und "Englisch"), die ständig sichtbar bleiben. Das Ausblenden betrifft wahlweise auch die Rahmen der Spalten 210 und 220 (Strichlinien).

Formularfunktionen sind in Spalte 230 durch Ellipsen (...) angedeutet. Beispielsweise sind die Formate der Benutzereingabe 331, 332 festlegt. Der Benutzer wird gezwungen, zur Eingabe nur vorbestimmte Zeichen zu verwenden, beispielsweise: nur Zahlen (mit oder ohne Kommastellen), nur Buchstaben, Klein- oder Großbuchstaben, Wörter bis Maximallänge, usw.

Hinweise werden anzeigt, wenn beispielsweise der Benutzer mit der Maus in die erste Zeile der Tabelle geht. Ein möglicher Hinweis für Vorlage 201 ist beispielsweise: "Bitte die Wörter vollständig einschreiben!"

Hilfen können anzeigen werden, wenn der Benutzer beispielsweise die Funktionstaste "F1" oder einen entsprechenden Menüpunkt aktiviert.

Schreibschutz (nicht dargestellt) kann beispielsweise für die Außenspalten 210, 220 vereinbart werden.

Im letzten Verfahrenschritt 440 Entfernen der Formatierungen - zur Fertigstellung des Dokument - verschwinden die Ausblendungen (Auszeichnungen werden sichtbar). Die Benutzereingaben bleiben unverändert. Hinweise, Hilfen sowie Schreibschutz sind nicht mehr nötig.

Mit anderen Worten, die erweiterten Formatierungen des Textverarbeitungsprogramms werden nur benutzt, solange der Benutzer mit dem Programm arbeitet.

FIG. 7 zeigt ein Dokument 302 mit Attribut-Auszeichnungen. Für die Auszeichnungen <A> 311, 321 hat der Benutzer das Attribut SPRACHE auf den Wert DE 331 festgelegt:

$$\text{<A SPRACHE="DE">} \tag{4}$$

FIG. 8 zeigt die erweiterte Tabellenvorlage 202 als Grundlage des Dokuments 302. Die Start-Auszeichung 311 (linke Spalte 210) enthält das Start-Tag mit der Bezeichnung des Attributs; die Benutzereingabe 331 (Mittel-Spalte 230) ist die Festlegung auf DE; und die End-Auszeichung 321 (rechte Spalte 220) enthält das End-Tag.

Während im Beispiel der FIGS. 7-8 der Benutzer das Attribut SPRACHE festlegt, ist im folgenden Beispiel das Attribut auf den Wert DE fixiert. Der Benutzer ist aufgefordert, den Inhalt (z.B. das Wort "Patentanmeldung") des attributierten Tags einzugeben.

Das Dokument lautet:

$$\text{<A SPRACHE "DE"> Patentanmeldung </A>} \tag{5}$$

Die Formatvorlage lautet:

$$\text{311 <A SPRACHE "DE">} \tag{6}$$

$$\text{321 </A>} \tag{7}$$

Die vorliegende Erfindung wurde erläutert in der bevorzugten Ausführung der Tabellenvorlage 200, 201, 203 mit 3 Spalten. Der Fachmann kann Spalten für Auseichnungen und für Eingaben ergänzen. Beispielsweise gibt der Benutzer sowohl das Attribut (SPRACHE) als auch den Inhalt ein, so für das folgenden Dokument:

$$\text{<A SPRACHE "DE"> Anspruch </A>} \tag{8}$$

<A SPRACHE "EN"> Claim </A> (9)

Weitere Beispiele sind für Dokumente in Auszeichnungssprachen sind

- Wörterbücher,
- Patentanmeldungen (Tag <A> für den Titel, <B> für die Beschreibung, <C Nr.=" "> für die Ansprüche mit Nummern usw.),
- Dokumentationen für Software, Hardware usw.,
- Bedienungsanleitungen (vorteilhaft für mehrsprachige Dokumente),
- Text mit Randnoten (z.B. Gesetzeskommentare).

Die Textsorte - ob Wörterbuch oder Dokumentation - spielt keine Rolle. Dank der Auszeichnungen kann das Dokument 300 in andere Formen überführt werden, beispielsweise in eine druckfertige Datei (WORD-Formate wie *.doc oder *rtf; PDF-Datei), in einen Papierausdruck, in eine Internet-Darstellung (HTML). Zum Überführen ist der Fachmann in der Lage, beispielsweise mit Hilfe von weiteren Vorlagen (z.B. Style Sheet) und Sprachtransformationen (z.B. Extensible Style Language Transformation - XSLT) ohne daß es hier weiterer Erläuterungen bedarf.

Mit anderen Worten, die Erfindung ist auch vorteilhaft zum Erstellen von weiteren Dokumenten (z.B. Wörterbücher), die aus Dokumenten in Auszeichnungssprache abgeleitet werden.

Handelsübliche Textprogramme sind beispielsweise die Programme WORD und NOTEPAD (Microsoft), StarOffice (Sun) und WordPerfect (Corel). Tabellenprogramme können auch verwendet werden.

Bezugszahlen

| | |
|---|---|
| 100 | Computer-Program-Produkt |
| 200, 201, 202 | Tabellenvorlage |
| 210 | erste Spalte (links) |
| 220 | zweite Spalte (rechts) |
| 230 | dritte Spalte (Mitte) |
| 250 | Formatierung |
| 261, 262 | Kommentar |
| 300, 301, 302 | Dokument |
| 311, 312 | erste Auszeichnung (Start) |
| 321, 322 | zweite Auszeichnung (End) |
| 331, 332 | Benutzereingabe |
| 400 | Verfahren |
| 410 | Laden |
| 420 | Anzeigen |
| 430 | Empfangen |
| 440 | Entfernen |
| 9xx | Computer mit Komponenten |

**Patentansprüche**

1. Computerbasiertes Verfahren (400) zum Erstellen eines Dokumentes (300, 301, 302) in einer Auszeichnungssprache, wobei das Dokument (300, 301, 302) Textelemente (331, 332) enthält, die jeweils zwischen ersten Auszeichnungen (311, 312) und zweiten Auszeichnungen (321, 322) stehen, das Verfahren (400) **gekennzeichnet durch** die folgenden Verfahrensschritte:

   Laden (410) einer Tabellenvorlage (200, 201, 202) mit einer Formatierung (250) für die folgenden Spalten:

   - erste Spalte (210) mit den ersten Auszeichnungen (311, 312),
   - zweite Spalte (220) mit den zweiten Auszeichnungen (321, 322),
   - dritte Spalte (230), befindlich zwischen der ersten und zweiten Spalte (210, 220);

Anzeigen (420) der Tabellenvorlage (200);
Empfangen (430) einer Benutzereingabe (331, 332) in der dritten Spalte (330); sowie
Entfernen (440) der Formatierung (250) unter Beibehaltung der Auszeichnungen (311, 312, 321, 322) und der
Benutzereingabe (331, 332).

2. Verfahren (400) nach Anspruch 1, wobei die Auszeichnungssprache XML, HTML oder SGML ist, die ersten Auszeichnungen (311, 312) Start-Tags und die zweiten Auszeichnungen (321, 322) End-Tags sind.

3. Verfahren (400) nach Anspruch 1, wobei die Auszeichnungssprache XML, HTML, XHTML oder SGML ist, die ersten Auszeichnungen (311) und die zweiten Auszeichnungen (321) Attribute einschließen.

4. Verfahren (400) nach Anspruch 1, wobei beim Laden (410) ein Kommentar (261, 262) geladen wird, die dem Benutzer die Bedeutung der Benutzereingabe angibt.

5. Verfahren (400) nach Anspruch 1, wobei beim Laden (410) die Formatierung (250) das Ausblenden der Auszeichnungen (311, 312, 321, 322) beinhaltet, so daß sich das Anzeigen (420) auf die dritte Spalte (230) beschränkt.

6. Verfahren (400) nach Anspruch 1, wobei ein Schreibschutz für die erste und die zweite Spalte (310, 320) eingeführt wird.

7. Verfahren (400) nach den einem oder mehreren der vorhergehenden Ansprüche, wobei

   • im Schritt Laden (410), die Tabellenvorlage (200) als Tabelle in einem Textverarbeitungsprogramm vorliegt;
   • im Schritt Anzeigen (420), die Tabelle auf einem Bildschirm angezeigt wird;
   • im Schritt Entfernen (440) die Tabelle (a) in eine Zwischenablage kopiert und von dort in einen Texteditor kopiert wird oder (b) die Tabelle in einem Nur-Text-Format gespeichert wird.

8. Verfahren (400) nach Anspruch 7, wobei das Textverarbeitungsprogramm die Funktionalitäten des Programms WORD und der Texteditor die Funktionalitäten des Programms NOTEPAD hat.

9. Verfahren (400) nach Anspruch 7, wobei im Schritt Laden (410) eine Tabellenvorlage (200) geladen wird, deren dritte Spalte (320) Formularfunktionen bzw. Kurzhilfen haben.

10. Computerbasiertes Verfahren zum Erstellen einer Tabellenvorlage (200, 201, 202) für ein Dokument (300, 301, 302) in einer Auszeichnungssprache, wobei das Dokument Textelemente (331, 332) enthält, die jeweils zwischen Start-Auszeichnungen (311, 312) und End-Auszeichnungen (321, 322) stehen,
das Verfahren **gekennzeichnet durch**
das Anlegen von drei Tabellenspalten (210, 220, 230) mit folgenden Eigenschaften: (a) die Mittel-Spalte kann Benutzereingaben (331, 332) empfangen; (b) die Formatierung (250) der Spalten (210, 220, 230) ist entfernbar; sowie
das Auswerten einer Definitionsdatei (DTD) mit Definitionen zum Beschreiben der linken Spalte (210) mit Start-Auszeichnungen (311, 321) und Definitionen der rechten Spalte (220) mit End-Auszeichnungen (321, 322), wobei die Start-Auszeichnungen und die End-Auszeichnungen dauerhaft ausgelegt sind.

11. Computer-Programm-Produkt (CPP) als Tabellenvorlage (200, 201, 202) zum Erstellen eines Dokumentes (300, 301, 302) in einer Auszeichnungssprache, das Produkt **gekennzeichnet durch** die folgenden Spalten-Formatierung (250):

   • erste Spalte (210) mit ersten Auszeichnungen (311, 312),
   • zweite Spalte (220) mit zweiten Auszeichnungen (321, 322),
   • dritte Spalte (230) zwischen der ersten und zweiten Spalte (210, 220) zum Empfangen (430) einer Benutzereingabe (331, 332),

   die Formatierung (250) entfernbar unter Beibehaltung der Auszeichnungen (311, 312, 321, 322) und der Benutzereingabe (331, 332), so daß bei entfernter Formatierung (250) das Dokument (300, 301, 302) bereitsteht.

12. Computer-Programm-Produkt (CPP) nach Anspruch 11, **dadurch gekennzeichnet, daß** dessen Auszeichnungen der Sprache XML entsprechen, wobei die Auszeichnungen durch Konversion einer DTD bereitgestellt werden.

NETWORK 990

SIGNAL 980

SIGNAL 981

SIGNAL 982

COMPUTER 900

PROCESSOR
910

MEMORY
920

CPP
100

BUS
930

COMPUTER
901

COMPUTER
902

INPUT
940

CARRIER
970

OUTPUT
950

USER INTERFACE
960

999
COMPUTER
SYSTEM

FIG. 1

311 < A >          331 Beispiel          321 < /A >

312 < B >          332 example          322 < /B >

.

300 DOKUMENT

FIG. 2

250

210                    230                    220

| 311 < A > | 331 Bei | 321 < /A > |
|-----------|---------|------------|
| 312 < B > |         | 322 < /B > |

200      TABELLENVORLAGE

FIG. 3

410 | LADEN DER VORLAGE |

↓

420 | ANZEIGEN DER VORLAGE |

↓

430 | EMPFANGEN DER EINGABE |

↓

440 | ENTFERNEN DER FORMATIERUNG |

400 VERFAHREN

FIG. 4

| | | |
|---|---|---|
| <!-- | 261 DEUTSCH | --> |
| 311 < A > | 331 Beispiel | 321 < /A > |
| <!-- | 262 ENGLISH | --> |
| 312 < B > | 332 example | 322 < /B > |

<u>301</u>    DOKUMENT MIT KOMMENTAREN

FIG. 5

250

| 210 | 230 | 220 |
|---|---|---|
| <!-- | 261 DEUTSCH | --> |
| 311 < A > | 331 Bei ... | 321 < /A > |
| <!-- | 262 ENGLISCH | --> |
| 312 < B > | 332 ... ... | 322 < /B > |

<u>201</u>    TABELLENVORLAGE MIT ERWEITERUNGEN

FIG. 6

311                    331   321

< A SPRACHE = "   DE    "A >


302     DOKUMENT

        (AUSZEICHNUNGEN ALS ATTRIBUTE)

                                                FIG. 7


        250

210                    230              220

| 311 | 331 | 321 |
|---|---|---|
| < A SPRACHE =" | DE | "A > |


202     TABELLENVORLAGE

        (AUSZEICHNUNGEN ALS ATTRIBUTE

                                        FIG. 8

Europäisches
Patentamt

## EUROPÄISCHER RECHERCHENBERICHT

Nummer der Anmeldung

EP 02 07 5233

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 98 36365 A (ELECTRONIC DATA SYST CORP) 20. August 1998 (1998-08-20) * Seite 14, Zeile 8 - Seite 17, Zeile 28; Abbildung 2 *<br>--- | 1-12 | G06F17/21 |
| A | EP 1 079 311 A (HEWLETT PACKARD CO) 28. Februar 2001 (2001-02-28) * Absätze [0007]-[0013] *<br>--- | 1-12 | |
| A | US 5 845 299 A (ARORA GAGAN ET AL) 1. Dezember 1998 (1998-12-01) * Spalte 2, Zeile 20 - Zeile 61 *<br>----- | 1-12 | |

| | | | RECHERCHIERTE SACHGEBIETE (Int.Cl.7) |
|---|---|---|---|
| | | | G06F |

Der vorliegende Recherchenbericht wurde für alle Patentansprüche erstellt

| Recherchenort | Abschlußdatum der Recherche | Prüfer |
|---|---|---|
| BERLIN | 23. August 2002 | Haffner, R |

**ANHANG ZUM EUROPÄISCHEN RECHERCHENBERICHT
ÜBER DIE EUROPÄISCHE PATENTANMELDUNG NR.**                    EP 02 07 5233

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-08-2002

| Im Recherchenbericht angeführtes Patentdokument | | Datum der Veröffentlichung | Mitglied(er) der Patentfamilie | | Datum der Veröffentlichung |
|---|---|---|---|---|---|
| WO 9836365 | A | 20-08-1998 | AU | 6158698 A | 08-09-1998 |
| | | | WO | 9836365 A1 | 20-08-1998 |
| EP 1079311 | A | 28-02-2001 | EP | 1079311 A2 | 28-02-2001 |
| | | | JP | 2001101171 A | 13-04-2001 |
| US 5845299 | A | 01-12-1998 | AU | 3808297 A | 20-02-1998 |
| | | | WO | 9804978 A1 | 05-02-1998 |
| | | | US | 2002023111 A1 | 21-02-2002 |

EPO FORM P0461

Für nähere Einzelheiten zu diesem Anhang : siehe Amtsblatt des Europäischen Patentamts, Nr.12/82